# FASCICULE DE BREVET EUROPEEN

(11) **EP 2 008 147 B1**
(45) Date de publication et mention de la délivrance du brevet: **12.03.2014**
(21) Numéro de dépôt: 07731253.6
(22) Date de dépôt: 05.04.2007
(51) Int. Cl.: G02C 5/16

(54) **LUNETTES DE TYPE SANS ENTOURAGE A BRANCHES LATERALES DE STRUCTURE ESSENTIELLEMENT FILAIRE**
RANDLOSE BRILLEN MIT BÜGELN EINER IM WESENTLICHEN FILAMENTÄREN STRUKTUR
RIMLESS SPECTACLES WITH SIDES OF ESSENTIALLY FILAMENTARY STRUCTURE

(30) Priorité: 20.04.2006 FR 0603493
(43) Date de publication de la demande: 31.12.2008
(73) Titulaire: Minima, 91310 Linas (FR)
(72) Inventeur: PERIE, Jean-Claude, 82003 Montauban (FR)
(74) Mandataire: Jaunez, Xavier
(86) Numéro de dépôt international: PCT/FR2007/000577
(87) Numéro de publication internationale: WO 2007/125184

(56) Documents cités:
- WO-A-81/01749
- FR-A1- 2 862 390
- FR-A3- 2 723 649
- US-A- 5 042 933
- US-A1- 2003 058 401

## Description

### DOMAINE DE L'INVENTION

La présente invention concerne le domaine des lunettes du type sans entourage, comportant un pontet reliant les deux verres de lunettes, et deux branches latérales reliées à une zone latérale respective du verre correspondant.

### ARRIERE-PLAN DE L'INVENTION

Les lunettes dites sans entourage, ou encore à monture percée du fait des perçages pratiqués dans l'épaisseur des verres pour la fixation de la monture, sont de plus en plus répandues.

On pourra notamment se référer aux documents WO-2004/003632A, WO-02/21193 A, EP-1 107 042 A, WO-96/05535 A, US 6 447 517 A, US 5 042 933, US 2003/0058401, WO-00/26716 A, EP-1 382 988 A, WO-03/014804 A, WO-02/095482 A, WO-02/095481 A et WO81/01749A.

Dans les agencements précités, on prévoit un perçage et une encoche latérale débouchante, ou encore deux perçages, pour chaque élément constitutif de la monture, à savoir le pontet et les deux branches latérales.

Dans la plupart des cas, les extrémités d'accrochage des branches latérales présentent une con-figuration complexe, avec de multiples cintrages, ce qui implique un coût de fabrication élevé. De plus, il est parfois nécessaire d'effectuer ces cintrages in situ, après avoir enfilé une extrémité de branche rectiligne et non encore cintrée dans un perçage du verre, comme cela est illustré dans le document US-A-2004/0051843, ce qui est particulièrement malcommode pour l'opérateur.

On pourra également se référer au document FR-2 723 649 A qui décrit une monture filaire dont les tenons comportent deux branches superposées traversant les verres d'avant en arrière en passant dans des perçages associés. Les extrémités de ces branches, qui dépassent en arrière des verres, reçoivent des capuchons de protection fixés par collage.

Plus récemment, la demanderesse a proposé un agencement de monture dont la structure filaire est très simple, ce qui permet un montage commode et rapide sur les verres, sans nécessité d'utiliser un outillage particulier, et sans également que la fixation de la monture sur les verres n'induise un risque de fragilisation de la zone concernée des verres, en particulier du fait d'un serrage excessif, comme cela est décrit dans le document WO-2006/027428 A. La structure filaire concernée comporte des branches latérales mono-filaires se terminant par une extrémité distale en forme de J, avec une portion longue passant dans un perçage traversant du verre avec interposition d'un manchon souple de serrage, et une portion courte d'anti-rotation revenant vers l'arrière et passant dans une encoche latérale débouchante ou dans un autre perçage traversant du verre, et ce sans serrer le verre entre ladite portion longue et ladite portion courte.

### OBJET DE L'INVENTION

La présent invention vise à proposer des lunettes du type sans entourage qui sont plus performantes, à la fois par la simplicité de leur structure et par la commodité de leur montage, que les montures antérieures précitées, tout en conservant l'approche minimale enseignée dans le document WO-2006/027428 A précité de la demanderesse.

### DEFINITION GENERALE DE L'INVENTION

Ce problème est révolu conformément à l'invention définie par la revendication 1.

Les deux portions principales formant chaque branche latérale sont en particulier superposées, et passent par deux perçages traversants superposés du verre, la portion frontale de ladite branche latérale s'étendant alors verticalement. En variante, ces portions principales peuvent être juxtaposées et passer dans deux perçages traversants juxtaposés du verre, la portion frontale s'étendant alors horizontalement ou dans une direction oblique.

Conformément à un premier mode d'exécution, chaque branche latérale est constituée d'une pièce métallique unique qui est déformable en flexion sans articulation, et dont les deux extrémités libres se rejoignent au niveau d'un élément rapporté sur celles-ci. Ceci est intéressant dans la mesure où il est alors possible de monter très rapidement les branches latérales sur les verres de lunettes par simple enfilage de celles-ci par les deux perçages traversants des verres.

Avantageusement alors, l'élément rapporté est un manchon semi-rigide dans lequel viennent s'encastrer les deux extrémités libres de la branche latérale, ou une gaine souple enserrant les deux extrémités libres de la branche latérale. En particulier, la gaine souple peut se prolonger vers l'avant jusqu'à la face du verre correspondant de façon à recouvrir les deux portions principales superposées formant la branche latérale. On pourra également prévoir que la gaine souple est en matière plastique thermo-rétractable, et qu'elle est thermo-rétractée sur les parties concernées de la branche latérale.

Conformément à un autre mode d'exécution, les deux portions principales de chaque branche latérale sont interrompues par un élément de charnière formant articulation.

On pourra alors prévoir que l'élément de charnière est un bloc souple propre à chaque portion principale, dans lequel viennent s'encastrer les extrémités interrompues de ladite portion principale. En variante il pourra s'agir d'un bloc souple commun aux deux portions principales, dans lequel viennent s'encastrer les extrémités interrompues desdites portions principales.

Avantageusement alors, les deux portions principales se raccordent entre elles par une portion arrière unitaire, ou encore se rejoignent au niveau d'un élément rapporté sur celles-ci, tel qu'un manchon ou une gaine souple.

On pourra en outre prévoir que les deux portions principales de chaque branche latérale sont espacées d'une distance (d) qui décroît continûment du verre vers l'arrière. En variante, les deux portions principales de chaque branche latérale sont espacées d'une distance (d) qui est essentiellement constante du verre vers l'arrière. Avantageusement alors, la distance (d) précitée est, au niveau de la face arrière du verre, essentiellement comprise entre 4h et 20h, h étant la hauteur ou le diamètre de l'élément filaire constitutif des portions principales.

De préférence, les portions principales de chaque branche latérale sont réalisées à partir d'un fil métallique qui est aplati selon un plan vertical en arrière du verre afin d'augmenter la flexibilité de ladite branche dans les directions de manoeuvre de celle-ci.

Avantageusement alors, chaque portion principale présente au moins une pointe en saillie au niveau de sa partie qui passe dans le perçage traversant associé du verre, ladite au moins une pointe venant s'ancrer dans le manchon souple de serrage quand ladite portion principale est en place, et/ou s'étend depuis l'arrière du verre en étant rectiligne sur une distance au moins égale à l'épaisseur du verre, jusqu'à un coude permanent formant un angle obtus avec la partie de ladite portion qui s'étend au-delà de ladite distance.

On pourra également prévoir que le fil métallique constitutif de la portion frontale de chaque branche latérale est également aplati, mais selon le plan de la face frontale du verre. En particulier, le fil métallique est un fil de titane, dont la section ronde est aplatie localement dans sa partie avant.

Avantageusement enfin, chaque manchon souple de serrage est une pièce rapportée qui est insérée dans le perçage correspondant du verre, ledit manchon présentant à son extrémité avant une collerette venant en appui contre la face frontale du verre.

D'autres caractéristiques et avantages de l'invention apparaîtront plus clairement à la lumière de la description qui va suivre, et des dessins annexés, qui illustrent un mode de réalisation préféré.

### BREVE DESCRIPTION DES DESSINS

Il sera fait référence aux figures des dessins annexés, ou :
- la figure 1 illustre en perspective des lunettes du type sans entourage conformes à l'invention ;
- la figure 2 est une vue de dessus des lunettes précitées, vue sur laquelle les extrémités d'accrochage des branches latérales sont vues par transparente ;
- la figure 3 est une vue latérale des lunettes précitées, vue sur laquelle les extrémités d'accrochage de la branche latérale visible sont également vues par transparence ;
- la figure 4 est une vue en élévation d'une branche latérale du type précité, sans son manchon arrière de recouvrement, et la figure 5 est une vue de dessus de ladite branche latérale ;
- la figure 6 est une vue partielle en perspective, à plus grande échelle, permettant de mieux distinguer la zone d'accrochage d'une branche latérale ;
- la figure 7 est une coupe selon VII-VII de la figure 6, et la figure 8 est une vue partielle en élévation concernant la partie avant de la branche latérale avec ses manchons souples de serrage mis en place ;
- les figures 9, 10 et 11 correspondent respectivement aux figures 6, 7 et 8 (la figure 10 étant une coupe selon X-X de la figure 9), et illustrent une variante de réalisation dans laquelle les portions principales superposées constituant chaque branche latérale sont à une faible distance l'une de l'autre ;
- la figure 12 est une vue latérale illustrant une variante dans laquelle le manchon arrière de recouvrement est remplacé par une gaine souple ;
- la figure 13 est une variante du mode de réalisation précédent, dans laquelle la gaine est prolongée vers l'avant jusqu'au verre, de façon a constituer un fourreau, la figure 14 étant la coupe associée selon la ligne XIV-XIV de la figure 13 ;
- les figures 15 est 16 illustrent, respectivement en vue latérale et en vue de dessus, une variante dans laquelle les portions principales de chaque branche latérale sont interrompues par un élément de charnière, ici sous la forme d'un bloc souple associé à chaque portion principale ;
- les figures 17 et 18 illustrent, respectivement en vue latérale et en vue de dessus, une variante du mode de réalisation précédent dans laquelle les portions principales de la branche latérale sont essentiellement parallèles entre elles, et se raccordent entre elles par une portion unitaire ;
- les figures 19 et 20 illustrent, respectivement en vue latérale et en vue de dessus, une autre variante dans laquelle un bloc de charnière commun aux deux portions principales est prévu pour former l'articulation ;
- la figure 21 illustre en perspective une variante des modes de réalisation précédents, dans laquelle les portions principales de chaque branche latérale ne sont plus superposées, mais juxtaposées (ici horizontalement) ;
- la figure 22 est une vue de dessus des lunettes de la figure 21, vue sur laquelle les extrémités d'accrochage des branches latérales sont vues par transparence ; et
- la figure 23 est une vue schématique illustrant les différentes positions relatives entre une branche latérale à portions principales superposées et le verre correspondant au fur et à mesure de l'enfilage de celle-ci par le côté frontal du verre.

### DESCRIPTION DETAILLEE DU MODE DE REALISATION PREFERE

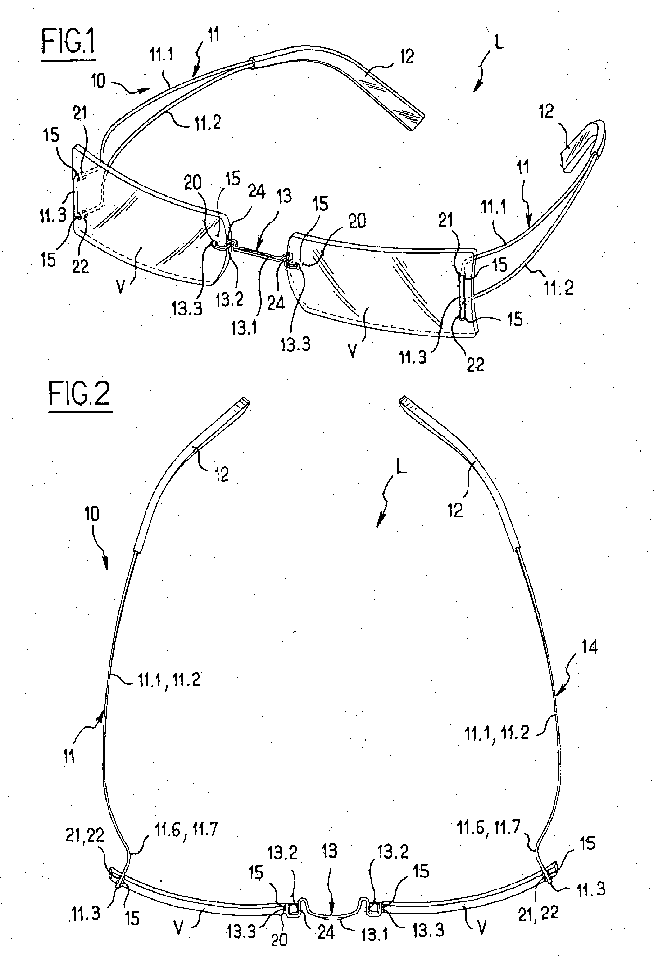

Comme représenté sur les figures 1 et 2, l'invention concerne des lunettes L du type sans entourage. Ces lunettes comportent, deux verres V et une monture 10 comprenant un pontet 13 reliant les deux verres de lunettes V, et deux branches latérales 11 reliées à une zone latérale respective du verre V correspondant.

Chaque branche latérale 11 présente une structure essentiellement filaire, comportant deux portions principales 11.1, 11.2, ici superposées, s'étendant en arrière du verre V et se rejoignant au niveau de l'extrémité arrière de ladite branche, en l'espèce au niveau d'un manchon semi-rigide 12. Les portions principales 11.1, 11.2 de chaque branche latérale 11 se prolongent en outre vers l'avant en passant par deux perçages traversants 21, 22, ici superposés, du verre V, et se raccordent entre elles au voisinage de la face frontale dudit verre par une portion frontale notée 11.3. En l'espèce, cette portion frontale s'étend verticalement. Un manchon souple 15 est par ailleurs interposé dans chaque perçage traversant 21, 22, afin de serrer la portion principale associée 11.1, 11.2 pour assurer le maintien en place de la branche latérale 11 sur le verre correspondant V.

Ainsi, un tel agencement permet d'avoir deux points de serrage, ici superposés, au niveau des perçages traversants 21, 22, grâce aux manchons souples 15 interposés dans ceux-ci. Le serrage assuré est suffisant pour assurer le maintien en place de chaque branche latérale 11 sur le verre correspondant V sans qu'il soit nécessaire de prévoir un autre organe de fixation rapporté ou non. La fonction d'anti-rotation est également assurée au niveau de chacun des perçages traversants, de sorte que l'on est assuré d'éviter tout débattement des branches latérales amorçant un pivotement de celles-ci autour d'un axe perpendiculaire au plan du verre.

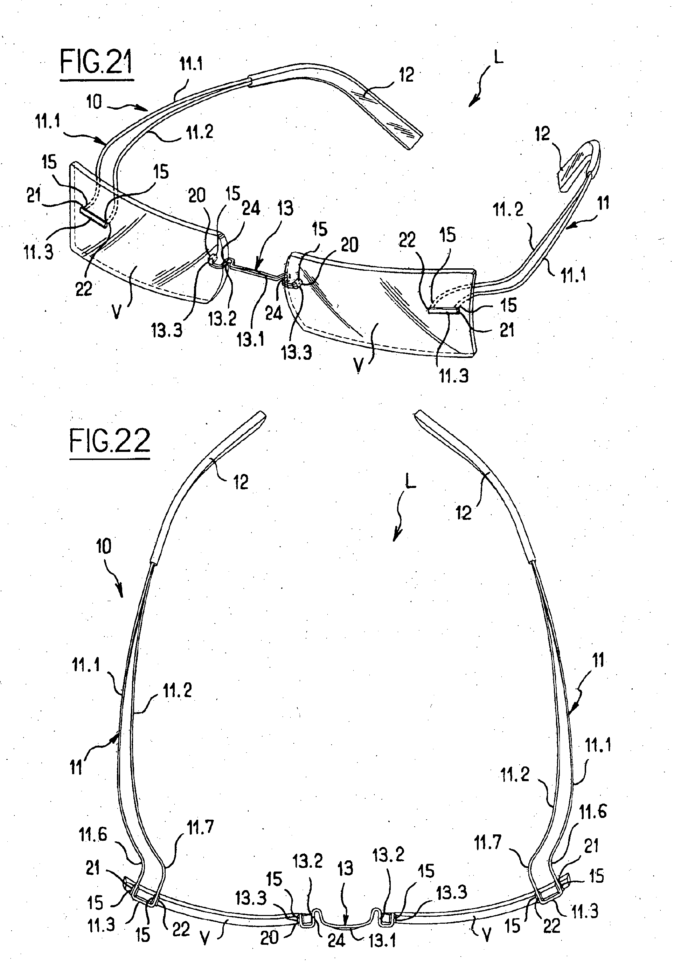

Comme on le verra par la suite, les perçages traversants associés 21, 22 des verres V peuvent être non pas superposées, mais juxtaposées, la portion frontale 11.3 de chaque branche latérale s'étendant alors non pas verticalement, mais horizontalement (comme illustré aux figures 21 et 22), ou dans une direction oblique (variante non illustrée).

Le pontet 13, de structure également filaire, est quant à lui de conception classique, avec une partie principale cintrée 13.1, et des extrémités latérales d'accrochage 13.2 et 13.3 qui coopèrent avec un perçage 20 et une encoche latérale débouchante 24 du verre V correspondant, pour la liaison entre le pontet et les deux verres de lunettes. On distingue ainsi les portions d'accrochage du pontet, qui s'accrochent sur la zone du verre correspondant par simple élasticité. Il est d'ailleurs également prévu, pour les extrémité du pontet qui passent dans un trou traversant 20, l'interposition d'un manchon souple 15 de serrage analogue aux manchons superposés utilisés pour le maintien de chacune des branches latérales 11. On pourrait naturellement prévoir un pontet de structure différente, en particulier agencé pour porter des plaquettes nasales.

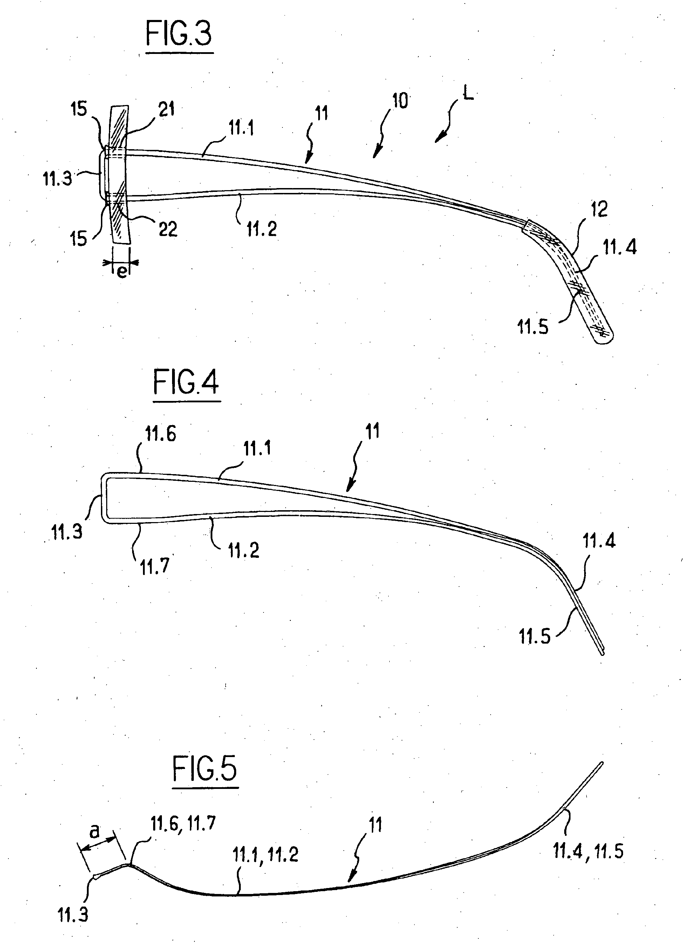

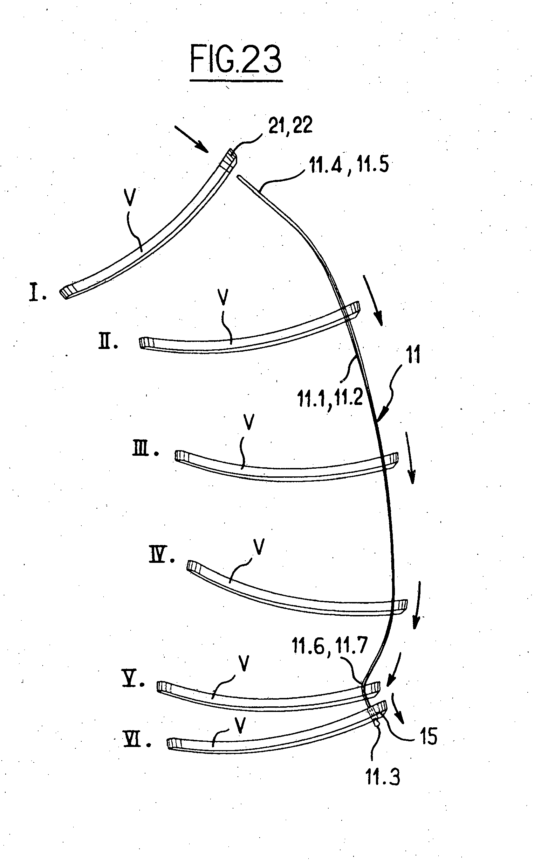

En l'espèce, chaque branche latérale 11 est constituée d'une pièce métallique unique qui est déformable en flexion sans articulation. Comme cela est mieux visible sur les figures 3, 4 et 5, on parvient alors à une structure particulièrement simple pour les branches latérales 11, avec une pièce métallique unique dont les deux extrémités libres, notées 11.4 et 11.5 se rejoignent au niveau d'un élément rapporté sur celles-ci, en l'occurrence un manchon semi-rigide 12 dans lequel viennent s'encastrer ces extrémités libres 11.4, 11.5. En l'espèce, chaque portion principale 11.1, 11.2 s'étend depuis l'arrière du verre V en étant rectiligne sur une distance notée (a) qui est au moins égale à l'épaisseur (e) du verre V, jusqu'à un coude permanent respectivement 11.6, 11.7 qui forme un angle obtus avec la partie de ladite portion qui s'étend au-delà de la ladite distance. La présence de cette partie rectiligne sur une distance (a) trouve sa justification dans la mise en place de la branche latérale 11 sur le verre associé V, laquelle mise en place sera décrite ultérieurement en référence à la figure 23.

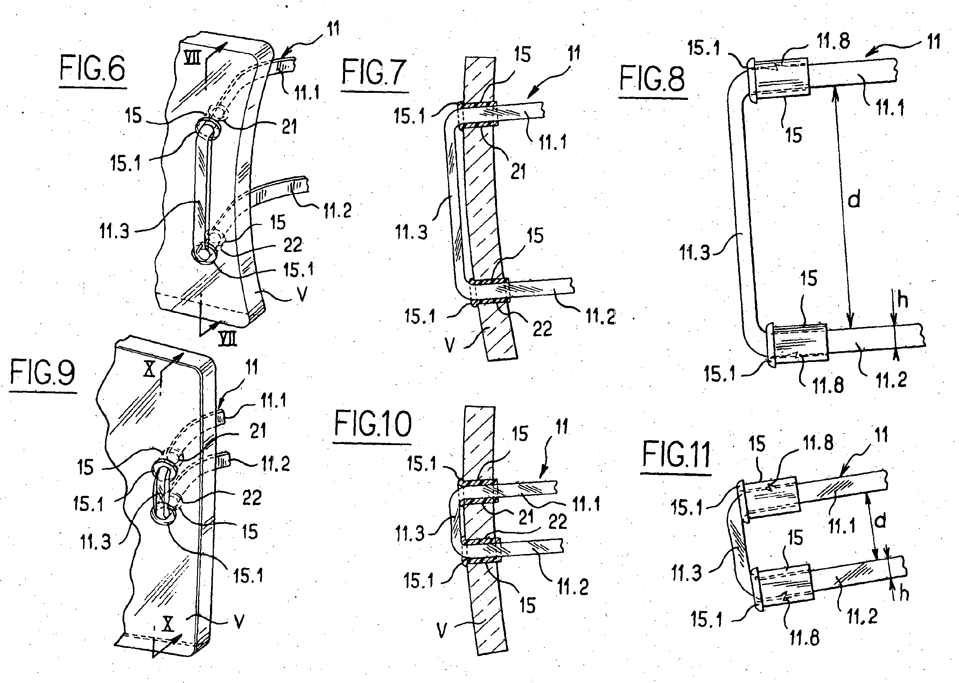

Les vues à plus grande échelle des figures 6, 7 et 8 permettent de mieux distinguer la structure du fil métallique constitutif des portions principales 11.1, 11.2 et de la portion frontale 11.3 de chaque branche latérale 11. Les portions principales 11.1, 11.2 sont ainsi réalisées à partir d'un fil métallique qui est aplati selon un plan vertical en arrière du verre V, afin d'augmenter la flexibilité de la branche latérale 11 dans les directions de manoeuvre de celle-ci. Il s'agira de préférence d'un fil de titane dont la section initialement ronde est aplatie localement dans sa partie avant. On constate également que le fil métallique constitutif de la portion frontale 11.3 de chaque branche latérale 11 est aplati, mais selon le plan de la face frontale du verre V. Ceci permet de diminuer le caractère saillant de la portion frontale 11.3 devant le verre concerné. Du fait de la présence de deux plans perpendiculaires pour les zones aplaties, à savoir d'une part le plan vertical commun des zones aplaties des portions principales 11.1, 11.2, et d'autre part le plan vertical de la portion frontale 11.3, on trouvera une zone de torsion du fil au niveau de chacun des coudes de raccordement, c'est-à-dire au débouché des perçages traversants 21, 22 au-delà des manchons 15 interposés.

A ce titre, il convient de noter que chaque manchon souple de serrage 15, qui est issu d'une pièce rapportée insérée dans le perçage correspondant 21 où 22 du verre V, présente à son extrémité avant une collerette 15.1 venant en appui contre la face frontale du verre V, ce qui permet de constituer une butée d'enfoncement maximum lors de la mise en place de la branche latérale 11 par coulissement des portions principales 11.1, 11.2 de celle-ci, et d'éviter ainsi un contact direct entre la face interne de la portion frontale aplatie 11.3 et la face frontale du verre V.

Il est par ailleurs intéressant de prévoir que chaque portion principale 11.1, 11.2 présente au moins une pointe en saillie au niveau de sa partie qui passe dans le perçage traversant associé 21, 22 du verre V, laquelle pointe vient s'ancrer dans le manchon souple dé serrage 15 quand ladite portion principale est en place. En l'espèce, comme cela est mieux visible sur la figure 8, on a prévu une pointe formant branche d'hameçon 11.8 sur le bord supérieur de la portion principale 11.1 et sur le bord inférieur de la portion principale 11.2.

Pour la mise en place de la branche latérale 11 sur le verre V associé, il est préférable d'équiper chaque portion principale 11.1, 11.2 de son manchon souple de serrage 15, comme cela est illustré sur la figure 8, ledit manchon pénétrant en fin de coulissement dans le perçage traversant associé du verre, avec un coincement qui devient important lorsque la pointe 11.8 arrive au niveau dudit perçage.

Sur la figure 8, on a noté (d) la distance séparant les deux portions principales 11.1, 11.2 de chaque branche latérale 11. Cette distance (d) pourra naturellement varier selon la forme souhaitée des branches latérales 11. Cependant, les impératifs d'ordre mécanique impliquent en général de choisir une distance (d) qui est essentiellement comprise entre 4h et 20h, h étant la hauteur ou le diamètre de l'élément filaire constitutif des portions principales 11.1, 11.2.

Les figures 9, 10 et 11 illustrent ainsi une variante du mode de réalisation précédent, dans laquelle la distance (d) est beaucoup plus faible que pour le mode de réalisation précédent, alors que le fil métallique constitutif présente la même hauteur h.

Ainsi, avec un fil métallique de section ronde initiale de diamètre 0,9 mm, qui dans ses zones aplaties donne une hauteur h de 1,38 mm avec une épaisseur de 0,5 mm, on pourra choisir une distance (d) variant essentiellement entre 5 et 20 mm.

La distance (d), dans le cas des modes de réalisation qui viennent d'être décrits, décroît continûment à partir du verre V vers l'arrière. Il ne s'agit cependant que d'un exemple, et l'on verra ultérieurement d'autres variantes dans lesquelles les deux portions principales 11.1, 11.2 de chaque branche latérale 11 sont espacées d'une distance (d) qui est essentiellement constante du verre V vers l'arrière.

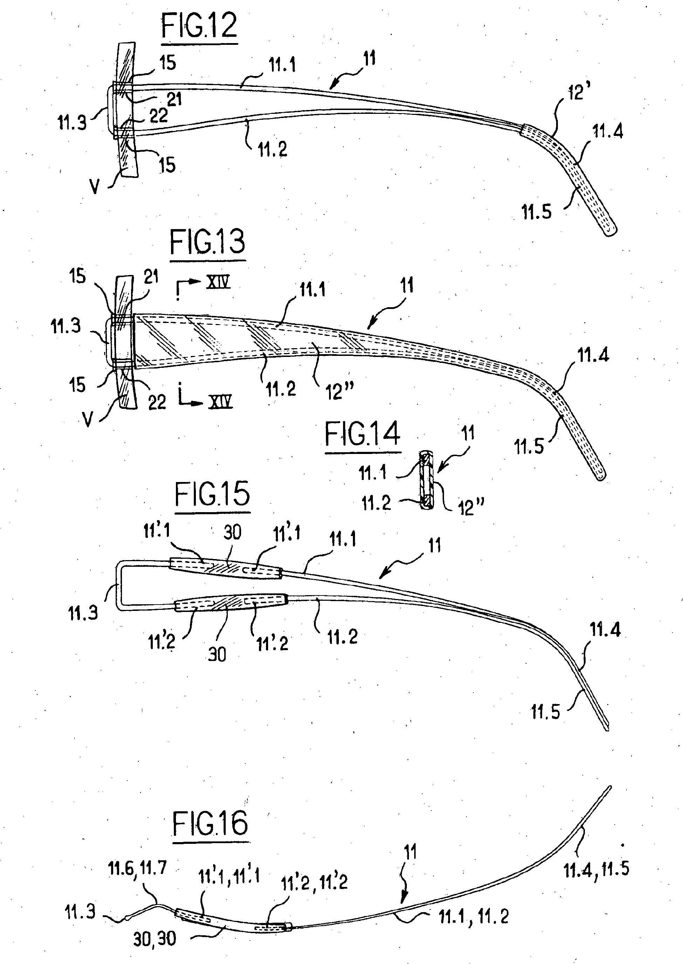

Sur la figure 12 on a illustré une variante dans laquelle le manchon semi-rigide 12 associé à l'encastrement des deux extrémités libres 11.4, 11.5 de la branche latérale 11 est remplacé par une gaine souple 12', par exemple en caoutchouc, enserrant les deux extrémités libres 11.4, 11.5 de la branche latérale 11.

Comme cela est illustré sur les figures 13 et 14, on pourra prévoir que la gaine souple précitée, alors notée 12'', se prolonge vers l'avant jusqu'à la face arrière du verre V correspondant, de façon à récouvrir les deux portions principales 11.1, 11.2 superposées. Dans ce cas, les portions principales 11.1, 11.2 forment une armature pour la gaine 12" (mieux visible sur la coupe de la figure 14), ce qui donne l'impression d'une branche latérale massive. Dans le cas des figures 12 et 13, il pourra s'avérer opportun de choisir une gaine souple 12', 12'' en matière plastique thermo-rétractable, de façon que ladite gaine soit thermo-rétractée sur les partie concernées de la branche latérale 11, avec un serrage parfaitement dosé, sans glissement vers l'arrière sur la branche latérale ni roulement des parties filaires arrière l'une sur l'autre.

Dans tous les modes d'exécution qui viennent d'être décrits, chaque branche latérale 11 était constituée d'une pièce métallique unique qui est déformable en flexion sans articulation, mais on pourra prévoir en variante que les deux portions principales 11.1, 11.2 de chaque branche latérale 11 sont interrompues par un élément de charnière formant articulation, comme cela a été illustré dans les figures 15 à 20.

Les figures 15 et 16 illustrent un mode de réalisation dans lequel l'élément de charnière est un bloc souple 30 propre à chaque portion principale 11.1, 11.2, dans lequel viennent s'encastrer les extrémités interrompues 11'.1, 11'.2 de ladite portion principale. Comme précédemment, la distance séparant les portions principales 11.1, 11.2 superposées décroît du verre V vers l'arrière.

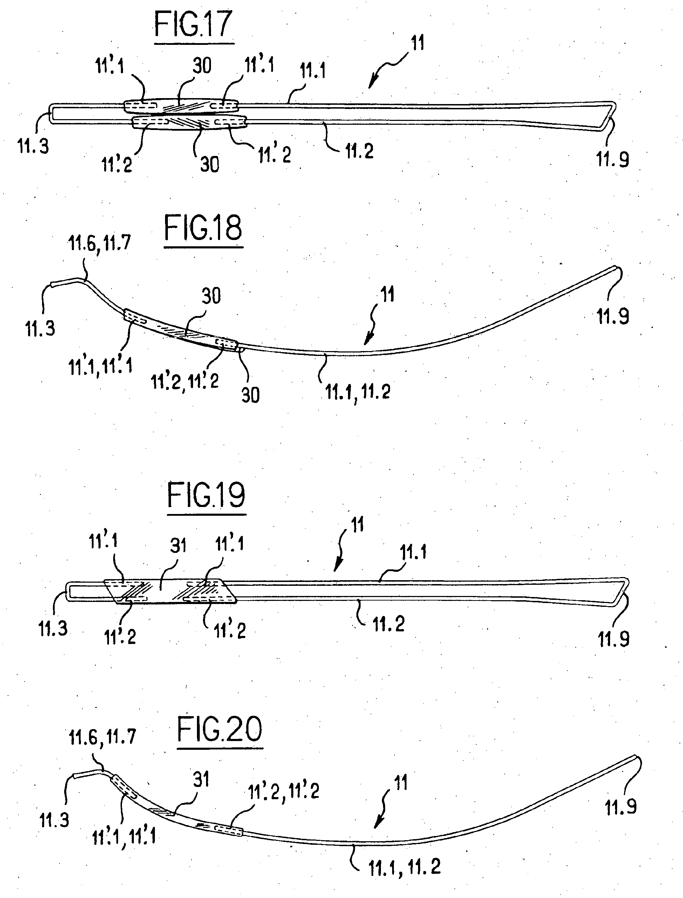

Les figures 17 et 18 illustrent une variante du mode de réalisation précédent, dans laquelle les portions principales 11.1 11.2 de chaque branche latérale 11 sont essentiellement parallèles entre elles, ce qui donne une distance entre portions principales qui est essentiellement constante, et se raccordent entre elles par une portion arrière unitaire 11.9.

Sur les figures 19 et 20, on distingue encoré une autre variante dans laquelle on a prévu un élément de charnière constitué par un bloc souple 31 commun aux deux portions principales 11.1, 11.2, dans lequel viennent s'encastrer les extrémités interrompues 11'.1, 11'.2 des portions principales.

On pourra naturellement remplacer le bloc souple 30 ou 31 précité par une charnière mécanique traditionnelle solidarisée aux extrémités interrompues 11'.1, 11'.2 (variante non représentée ici).

Lorsque les portions principales 11.1, 11.2 sont ainsi interrompues par un élément de charnière formant articulation, on perd l'intérêt d'une réalisation unitaire des branches latérales, mais l'on obtient une plus grande souplesse sur le plan de l'articulation grâce à la présence des blocs souples 30, 31 qui sont de préférence en matière plastique. Pour la variante des figures 15 et 16, chaque branche latérale est constituée par trois composants métalliques réunis entre eux par les blocs souples 30. Par contre, les modes de réalisation des figures 17 et 18, et 19 et 20, ne comportent que deux composants métalliques pour constituer une branche latérale.

Sur les figures 21 et 22, on a illustré une autre variante des lunettes selon l'invention, dans laquelle les portions principales 11.1, 11.2 formant chaque branche latérale 11 sont non pas superposées comme dans les modes de réalisation précédemment décrits, mais juxtaposées, et passent alors dans des perçages traversants associés 21, 22 du verre V qui sont juxtaposés de la même façon. En l'espèce, la juxtaposition est horizontale, c'est-à-dire que la portion centrale 11.3 s'étend horizontalement, mais on pourra prévoir que la portion centrale 11.3 s'étend dans une direction oblique (variante non illustrée ici). Paradoxalement, un tel agencement des branches latérales ne nuit aucunement à leur flexibilité dans les directions de manoeuvre de celles-ci, ceci étant dû à la finesse et à la grande flexibilité de chaque fil constitutif. Les extrémités arrière juxtaposées sont de la même façon encastrées dans un manchon semi-rigide 12. L'agencement avec juxtaposition ne modifie en rien les fonctions de serrage et d'anti-rotation précédemment décrites qui sont assurées au niveau de chacun des perçages juxtaposés 21, 22, avec interposition d'un manchon souple 15 dans chacun d'eux.

Sur la figure 23, on a illustré le processus de mise en place, qui est réalisé manuellement, d'une branche latérale, ici à portions principales superposées, par simple enfilage simultané, par le côté frontal du verre correspondant V, des deux portions principales 11.1, 11.2 de ladite branche latérale. Cette figure correspond naturellement au cas où la branche latérale 11 est constituée d'une pièce métallique unique qui est déformable en flexion sans articulation.

Sur cette figure, on a illustré diverses positions relatives entre le verre et les deux portions principales 11.1, 11.2 superposées de la branche latérale 11.

Sur la position I, les bouts des extrémités 11.4, 11.5 sont en face des perçages traversants superposés 21, 22 de façon à être prêts pour l'enfilage.

Les positions II, III, IV et V correspondent à des positions successives d'enfilage, au cours desquelles différentes parties des portions principales 11.1, 11.2 de la branche latérale 11 passent dans les perçages traversants superposés 21, 22, jusqu'à arriver à l'extrémité d'accrochage. La dernière phase de déplacement, qui intervient lorsque le verre V a dépassé les coudes 11.6, 11.7 des portions principales 11.1, 11.2, permet d'insérer les manchons 15, préalablement mis en place, dans les perçages traversants superposés 21, 22 du verre V, pour arriver à la position finale VI par un simple coulissement rectiligne, jusqu'à ce que la portion frontal 11.3 soit au voisinage direct de la face avant du verre V.

On constate donc que la branche latérale 11 est montée rapidement et aisément, et sans l'aide d'un quelconque outil. Il suffit ensuite de mettre en place soit le manchon semi-rigide 12, soit la gaine souple 12' ou 12'' comme indiqué plus haut.

Si l'on souhaite ensuite désolidariser l'ensemble, il suffit de procéder de façon inverse, ce qui permet de changer la branche latérale en conservant le même verre ou inversement.

On pourra naturellement prévoir en variante de disposer les manchons souples de serrage 15 dans les perçages superposés 21, 22 du verre V avant l'enfilage sur les portions principales 11.1, ,11.2 de la branche latérale 11, mais l'expérience tend à montrer que le prémontage des deux manchons 15 sur les portions principales 11.1, 11.2 facilite l'opération. Les manchons de serrage 15 seront de préférence réalisés en polyamide 6 ou en silicone, ces matériaux étant en outre transparents pour une plus grande discrétion.

S'il s'agit d'une branche latérale dont les portions principales 11.1, 11.2 sont juxtaposées (comme illustré aux figures 21 et 22), le processus d'enfilage dans les perçages traversants 21 et 22 (alors juxtaposés) est exactement le même que celui qui vient d'être décrit pour une branche latérales à portions principales superposées.

Dans le cas où les deux portions principales 11.1, 11.2 de chaque branche latérale 11 sont interrompues par un élément de charnière formant articulation (bloc souple 30 ou 31), la mise en place du type précité ne concernera naturellement vue la partie avant en forme de C, après quoi les extrémités interrompues sont encastrées dans le bloc souple 30 ou 31 correspondant pour réaliser l'assemblage final de la branche latérale.

On est ainsi parvenu a réaliser une structure à la fois simple et permettant une mise en place aisée et rapide sans l'utilisation d'un quelconque outil.

## Revendications

1. Lunettes du type sans entourage, compotant un pontet (13) reliant les deux verres lunettes (V), et deux branches latérale (11) reliées à une zone latérale respective du verre (V) correspondant, chaque branche latérale (11) présentant une structure essentiellement filaire, **caractérisées en ce que** chaque branche latérale comporte deux portions principales (11.1, 11.2) s'étendant en arrière du verre (V) et se rejoignant au niveau de l'extrémité arrière de ladite branche, lesdites portions principales se prolongeant vers l'avant en passant par deux perçages traversants (21, 22) du verre (V) et se raccordant entre elles au voisinage de la face frontale dudit verre par une portion frontale (11.3), un manchon souple (15) étant interposé dans chaque perçage traversant (21 ; 22) afin de serrer la portion principale associée (11.1 ; 11.2) pour assurer le maintien en place de la branche latérale (11) sur le verre (V) correspondant.

2. Lunettes selon la revendication 1, **caractérisées en ce que** les deux portions principales (11.1, 11.2) formant chaque branche latérale (11) sont superposées, et passent par deux perçages traversants (21, 22) superposés du verre (V), la portion frontale (11.3) de ladite branche latérale s'étendant alors verticalement.

3. Lunettes selon la revendication 1, **caractérisées en ce que** les deux portions principales (11.1, 11.2) formant chaque branche latérale (11) sont juxtaposées et passent par deux perçages traversants (21, 22) juxtaposés du verre (V), la portion frontale (11.3) de ladite branche latérale s'étendant alors horizontalement ou dans une direction oblique.

4. Lunettes selon l'une des revendications 1 à 3, **caractérisées en ce que** chaque branche latérale (11) est constituée d'une pièce métallique unique qui est déformable en flexion sans articulation, et dont les deux extrémités libres (11.4, 11.5) se rejoignent au niveau d'un élément (12, 12', 12'') rapporté sur celles-ci.

5. Lunettes selon la revendication 4, **caractérisées en ce que** l'élément rapporté est un manchon semi-rigide (12) dans lequel viennent s'encastrer les deux extrémités libres (11.4, 11.5) de la branche latérale (11).

6. Lunettes selon la revendication 4, **caractérisées en ce que** l'élément rapporté est une gaine souple (12', 12'') enserrant les deux extrémités libres (11.4, 11.5) de la branche latérale (11).

7. Lunettes selon la revendication 6, **caractérisées en ce que** la gaine souple (12'') se prolonge vers l'avant jusqu'à la face arrière du verre (V) correspondant de façon à recouvrir les deux portions principales (11.1, 11.2) superposées.

8. Lunettes selon la revendication 6 ou la revendication 7, **caractérisées en ce que** la gaine souple (12', 12'') est en matière plastique thermo-rétractable, et elle est thermo-rétractée sur les parties concernées de la branche latérale (11).

9. Lunettes selon l'une des revendications 1 à 3, **caractérisées en ce que** les deux portions principales (11.1, 11.2) de chaque branche latérale (11) sont interrompues par un élément de charnière formant articulation (30, 31).

10. Lunettes selon la revendication 9, **caractérisées en ce que** l'élément de charnière est un bloc souple (30) propre à chaque portion principale (11.1, 11.2), dans lequel viennent s'encastrer les extrémités interrompues (11'.1, 11'.2) de ladite portion principale.

11. Lunettes selon la revendication 9, **caractérisées en ce que** l'élément de charnière est un bloc souple (31) commun aux deux portions principales (11.1, 11.2), dans lequel viennent s'encastrer les extrémités interrompues (11'.1, 11'.2) desdites portions principales.

12. Lunettes selon la revendication 10 ou la revendication 11, **caractérisées en ce que** les deux portions principales (11.1, 11.2) se raccordent entre elles par une portion arrière unitaire (11.9).

13. Lunettes selon la revendication 10 ou la revendication 11, **caractérisées en ce que** les deux portions principales (11.1, 11.2) se rejoignent au niveau d'un élément rapporté sur celles-ci, tel qu'un manchon (12) ou une gaine souple (12').

14. Lunettes selon l'une des revendications 1 à 13 **caractérisées en ce que** les deux portions principales (11.1, 11.2) de chaque branche latérale (11) sont espacées d'une distance (d) qui décroît continûment du verre (V) vers l'arrière.

15. Lunettes selon l'une des revendications 1, 2 et 4 à 13, **caractérisées en ce que** les deux portions principales (11.1, 11.2) de chaque branche latérale (11) sont espacées d'une distance (d) qui est essentiellement constante du verre (V) vers l'arrière,

16. Lunettes selon la revendication 14 ou la revendication 15, **caractérisées en ce que** la distance (d) au niveau de la face arrière du verre (V) est essentiellement comprise entre 4h et 20h, h étant la hauteur ou le diamètre de l'élément filaire constitutif des portions principales (11.1, 11.2).

17. Lunettes selon l'une des revendications 1 à 16, **caractérisées en ce que** les portions principales (11.1, 11.2) de chaque branche latérale (11) sont réalisées à partir d'un fil métallique qui est aplati selon un plan vertical en arrière du verre (V) afin d'augmenter la flexibilité de ladite branche latérale dans les directions de manoeuvre de celle-ci.

18. Lunettes selon la revendication 17, **caractérisées en ce que** chaque portion principale (11.1, 11.2) présente au moins une pointe (11.8) en saillie au niveau de sa partie qui passe dans le perçage traversant associé (21, 22) du verre (V), ladite au moins une pointe venant s'ancrer dans le manchon souple de serrage (15) quand ladite portion principale est en place.

19. Lunettes selon la revendication 17, **caractérisées en ce que** chaque portion principale (11.1, 11.2) s'étend depuis l'arrière du verre (V) en étant rectiligne sur une distance (a) au moins égale à l'épaisseur (e) du verre (V), jusqu'à un coude permanent (11.6, 11.7) formant un angle obtus avec la partie de ladite portion qui s'étend au-delà de ladite distance.

20. Lunettes selon la revendication 17, **caractérisées en ce que** le fil métallique constitutif de la portion frontale (11.3) de chaque branche latérale (11) est également aplati, mais selon le plan de la face frontale du verre (V).

21. Lunettes selon l'une des revendications 17 à 20, **caractérisées en ce que** le fil métallique est un fil de titane, dont la section ronde est aplatie localement dans sa partie avant.

22. lunettes selon l'une des revendications 1 à 21, **caractérisées en ce que** chaque manchon souple de serrage (15) est une pièce rapportée qui est insérée dans le perçage correspondant (21, 22) du verre (V), ledit manchon présentant à son extrémité avant une collerette (15.1) venant en appui contre la face frontale du verre (V).

## Patentansprüche

1. Randlose Brille, umfassend einen Steg (13), der die beiden Brillengläser (V) verbindet, und zwei Seitenbügel (11), die an einem jeweiligen seitlichen Bereich des entsprechenden Glases (V) befestigt werden, wobei jeder Seitenbügel (11) eine im Wesentlichen drahtförmige Struktur aufweist, **dadurch gekennzeichnet, dass** jeder Seitenbügel zwei Hauptabschnitte (11.1, 11.2) umfasst, die sich von dem Glas (V) nach hinten erstrecken und auf Höhe des hinteren Endes des Bügels wieder zusammtreffen, wobei sich die Hauptabschnitte nach vorne verlängern, indem sie durch zwei Durchtrittsbohrungen (21, 22) des Glases verlaufen, und in der Nähe der Vorderseite des Glases durch einen vorderen Abschnitt (11.3) miteinander verbunden sind, wobei in jede Durchtrittsbohrung (21 ; 22) eine biegsame Hülse (15) eingesetzt ist, um den zugehörigen Hauptabschnitt (11.1 ; 11.2) einzuspannen, damit gewährleistet ist, dass der Seitenbügel (11) an dem entsprechenden Glas (V) festgehalten wird.

2. Brille nach Anspruch 1, **dadurch gekennzeichnet, dass** die beiden Hauptabschnitte (11.1, 11.2), die jeweils den Seitenbügel (11) bilden, übereinander liegen und durch zwei übereinanderliegende Durchtrittsbohrungen (21, 22), des Glases (V) verlaufen, wobei sich der vordere Abschnitt (11.3) des Seitenbügels dann senkrecht erstreckt.

3. Brille nach Anspruch 1, **dadurch gekennzeichnet, dass** die beiden Hauptabschnitte (11.1, 11.2), die jeweils den Seitenbügel (11) bilden, nebeneinander liegen und durch zwei nebeneinanderliegende Durchtrittsbohrungen (21, 22) des Glases (V) verlaufen, wobei sich der vordere Abschnitt (11.3) des Seitenbügels dann horizontal oder schräg erstreckt.

4. Brille nach einem der Ansprüche 1 bis 3, **dadurch gekennzeichnet, dass** jeder Seitenbügel (11) aus einem einzigen Metallstück gebildet ist, das ohne Gelenk biegeverformbar ist und dessen beide freien Enden (11.4, 11.5) auf Höhe eines Elements (12, 12', 12"), das an diese angesetzt ist, wieder zusammentreffen.

5. Brille nach Anspruch 4, **dadurch gekennzeichnet, dass** das angesetzte Element eine halbstarre Hülse (12) ist, in die sich die beiden freien Enden (11.4, 11.5) des Seitenbügels (11) einfügen.

6. Brille nach Anspruch 4, **dadurch gekennzeichnet, dass** das angesetzte Element eine flexible Ummantelung (12', 12") ist, die die beiden freien Enden (11.4, 11.5) des Seitenbügels (11) umschließt.

7. Brille nach Anspruch 6, **dadurch gekennzeichnet, dass** sich die flexible Ummantelung (12") nach vorne bis zur Rückseite des entsprechenden Glases (V) derart verlängert, dass die beiden übereinanderliegenden Hauptabschnitte (11.1, 11.2) umhüllt werden.

8. Brille nach Anspruch 6 oder 7, **dadurch gekennzeichnet, dass** die flexible Ummantelung (12', 12") aus schrumpfbarem Kunststoff besteht und auf die entsprechenden Teile des Seitenbügels (11) aufschrumpfbar ist.

9. Brille nach einem der Ansprüche 1 bis 3, **dadurch gekennzeichnet, dass** die beiden Hauptabschnitte (11.1, 11.2) eines jeden Seitenbügels (11) durch ein Scharnierelement unterbrochen sind, das ein Gelenk (30, 31) bildet.

10. Brille nach Anspruch 9, **dadurch gekennzeichnet, dass** das Scharnierelement ein biegsames Element (30) ist, das jedem Hauptabschnitt (11.1, 11.2) zugeordnet ist und in das sich die unterbrochenen Enden (11'.1, 11'.2) des Hauptabschnitts einfügen.

11. Brille nach Anspruch 9, **dadurch gekennzeichnet, dass** das Scharnierelement ein biegsames Element (31) ist, die die beiden Hauptabschnitte (11.1, 11.2) gemeinsam haben, und in die sich die unterbrochenen Enden (11'.1, 11'.2) der Hauptabschnitte einfügen.

12. Brille nach Anspruch 10 oder 11, **dadurch gekennzeichnet, dass** die beiden Hauptabschnitte (11.1, 11.2) durch einen einstückigen hinteren Abschnitt (11.9) miteinander verbunden sind.

13. Brille nach Anspruch 10 oder 11, **dadurch gekennzeichnet, dass** die beiden Hauptabschnitte (11.1, 11.2) auf Höhe eines auf diese aufgesteckten Elements wieder zusammentreffen, wobei dieses aufgesteckte Element eine Hülse (12) oder eine flexible Ummantelung (12') sein kann.

14. Brille nach einem der Ansprüche 1 bis 13, **dadurch gekennzeichnet, dass** die beiden Hauptabschnitte (11.1, 11.2) eines jeden Seitenbügels (11) durch einen Abstand (d) beabstandet sind, der vom Glas (V) nach hinten kontinuierlich kleiner wird.

15. Brille nach einem der Ansprüche 1, 2 und 4 bis 13, **dadurch gekennzeichnet, dass** die beiden Hauptabschnitte (11.1, 11.2) eines jeden Seitenbügels (11) durch einen Abstand (d) beabstandet sind, der im Wesentlichen vom Glas nach hinten konstant ist.

16. Brille nach Anspruch 14 oder 15, **dadurch gekennzeichnet, dass** der Abstand (d) auf Höhe der Rückseite des Glases (V) im Wesentlichen zwischen 4h und 20h liegt, wobei h die Höhe oder der Durchmesser des drahtförmigen Elements ist, das die Hauptabschnitte (11.1, 11.2) bildet.

17. Brille nach einem der Ansprüche 1 bis 16, **dadurch gekennzeichnet, dass** die Hauptabschnitte (11.1, 11.2) eines jeden Seitenbügels (11) aus einem Metalldraht hergestellt werden, der entlang einer vertikalen Ebene hinter dem Glas (V) abgeflacht ist, um die Flexibilität des Seitenbügels in seiner Handhabungsrichtung zu erhöhen.

18. Brille nach Anspruch 17, **dadurch gekennzeichnet, dass** jeder Hauptabschnitt (11.1, 11.2) mindestens eine Spitze (11.8) aufweist, die im Bereich des Teils des Hauptabschnitts, der durch die zugehörige Durchtrittsbohrung (21, 22) des Glases (V) läuft, vorsteht, wobei sich die mindestens eine Spitze in der biegsamen Haltehülse (15) verankert, wenn der Hauptabschnitt eingesetzt wird.

19. Brille nach Anspruch 17, **dadurch gekennzeichnet, dass** sich jeder Hauptabschnitt (11.1, 11.2) von der Rückseite des Glases (V) erstreckt, indem er geradlinig über eine Entfernung (a) verläuft, die mindestens der Dicke (e) des Glases (V) entspricht, und zwar bis zu einer permanenten Abbiegung (11.6, 11.7), die mit dem Teil des Abschnitts, der sich über diese Entfernung hinaus erstreckt, einen stumpfen Winkel bildet.

20. Brille nach Anspruch 17, **dadurch gekennzeichnet, dass** der Metalldraht, der den vorderen Abschnitt (11.3) eines jeden Seitenbügels (11) bildet, ebenfalls abgeflacht ist, jedoch entlang der Ebene der Vorderseite des Glases (V).

21. Brille nach einem der Ansprüche 17 bis 20, **dadurch gekennzeichnet, dass** der Metalldraht ein Titandraht ist, dessen runder Querschnitt lokal in seinem vorderen Abschnitt abgeflacht ist.

22. Brille nach einem der Ansprüche 1 bis 21, **dadurch gekennzeichnet, dass** jede biegsame Haltehülse (15) ein angesetztes Stück ist, das in die entsprechende Bohrung (21, 22) des Glases (V) eingesetzt ist, wobei die Hülse an ihrem vorderen Ende einen Bund (15.1) aufweist, der an der Vorderseite des Glases (V) anliegt.

## Claims

1. Rimless eyeglasses comprising a bridge (13) interconnecting two lenses (V), and two side branches (11) connected to respective side zones of the corresponding lenses (V), each side branch (11) essentially presenting a wire structure, the eyeglasses being **characterized in that** each side branch comprises two main portions (11.1, 11.2) extending rearwards from the lens (V) and meeting at the rear end of said branch, said main portions extending forwards, passing through two through holes (21, 22) in the lens (V), and being connected together in the vicinity of the front face of said lens by a front portion (11.3), a flexible bushing (15) being interposed in each through hole (21; 22) in order to clamp the associated main portion (11.1; 11.2) so as to hold the side branch (11) in place on the corresponding lens (V).

2. Eyeglasses according to claim 1, **characterized in that** the two main portions (11.1, 11.2) forming each side branch (11) are superposed, passing via two through holes (21, 22) in the lens (V) that are superposed, the front portion (11.3) of said side branch then extending vertically.

3. Eyeglasses according to claim 1, **characterized in that** the two main portions (11.1, 11.2) forming each side branch (11) are juxtaposed, passing via two through holes (21, 22) in the lens (V) that are juxtaposed, the front portion (11.3) of said side branch then extending horizontally or in an oblique direction.

4. Eyeglasses according to any one of claims 1 to 3, **characterized in that** each side branch (11) is constituted by a single piece of metal that is deformable in bending without a hinge, and having its two free ends (11.4, 11.5) meeting in an element (12, 12', 12") fitted thereon.

5. Eyeglasses according to claim 4, **characterized in that** the fitted element is a semirigid sleeve (12) in which the two free ends (11.4, 11.5) of the side branch (11) are embedded.

6. Eyeglasses according to claim 4, **characterized in that** the fitted element is a flexible sheath (12', 12") clamping together the two free ends (11.4, 11.5) of the side branch (11).

7. Eyeglasses according to claim 6, **characterized in that** the flexible sheath (12") extends forwards as far as the rear face of the corresponding lens (V) so as to cover the two superposed main portions (11.1, 11.2).

8. Eyeglasses according to claim 6 or claim 7, **characterized in that** the flexible sheath (12', 12") is made of heat-shrink plastics material, and it is heatshrunk on the portions concerned of the side branch (11).

9. Eyeglasses according to any one of claims 1 to 3, **characterized in that** the two main portions (11.1, 11.2) of each side branch (11) are interrupted by a hinge-forming element (30, 31).

10. Eyeglasses according to claim 9, **characterized in that** the hinge-forming element is a flexible block (30) belonging to each main portion (11.1, 11.2), with the interrupted ends (11'1, 11'2) of said main portion are being embedded therein.

11. Eyeglasses according to claim 9, **characterized in that** the hinge-forming element is a flexible block (31) common to both main portions (11.1, 11.2), with the interrupted ends (11'1, 11'2) of said main portions being embedded therein.

12. Eyeglasses according to claim 10 or claim 11, **characterized in that** the two main portions (11.1, 11.2) are connected together by a unitary rear portion (11.9).

13. Eyeglasses according to claim 10 or claim 11, **characterized in that** the two main portions (11.1, 11.2) meet in an element that is fitted thereon, such as a sleeve (12) or a flexible sheath (12').

14. Eyeglasses according to any one of claims 1 to 13, **characterized in that** the two main portions (11.1, 11.2) of each side branch (11) are spaced apart by a distance (d) that decreases continuously going rearwards away from the lens (V).

15. Eyeglasses according to any one of claims 1, 2, and 4 to 13, **characterized in that** the two main portions (11.1, 11.2) of each side branch (11) are spaced apart by a distance (d) that is essentially constant going rearwards away from the lens (V).

16. Eyeglasses according to claim 14 or claim 15, **characterized in that** the distance (d) at the rear face of the lens (V) lies essentially in the range 4h to 20h, where h is the height or the diameter of the wire element constituting the main portions (11.1, 11.2).

17. Eyeglasses according to any one of claims 1 to 16, **characterized in that** the main portions (11.1, 11.2) of each side branch (11) are made from a metal wire that is flattened in a vertical plane behind the lens (V) so as to increase the flexibility of said side branch in the directions in which the side branch is folded.

18. Eyeglasses according to claim 17, **characterized in that** each main portion (11.1, 11.2) presents at least one spike(11.8) projecting from its portion that passes through the associated through hole (21, 22) in the lens (V), said at least one spike becoming anchored in the flexible clamping bushing (15) when said main portion is in place.

19. Eyeglasses according to claim 17, **characterized in that** each main portion (11.1, 11.2) extends away from the lens (V) in rectilinear manner over a distance (a) that is not less than the thickness (e) of the lens (V), to a permanent bend (11.6, 11.7) that forms an obtuse angle with the fraction of said portion that extends beyond said distance.

20. Eyeglasses according to claim 17, **characterized in that** the metal wire constituting the front portion (11.3) of each side branch (11) is likewise flattened, but in the plane of the front face of the lens (V).

21. Eyeglasses according to any one of claims 17 to 20, **characterized in that** the metal wire is a titanium wire having a round section that is locally flattened in its front portion.

22. Eyeglasses according to any one of claims 1 to 21, **characterized in that** each flexible clamping bushing (15) is a fitting that is inserted in the corresponding hole (21, 22) in the lens (V), said bushing presenting a collar (15.1) at its front end that comes to bear against the front face of the lens (V).
